Europäisches Patentamt

European Patent Office

Office européen des brevets

(11) Publication number: **0 238 799 B1**

# EUROPEAN PATENT SPECIFICATION

(45) Date of publication of patent specification: **15.04.92**  (51) Int. Cl.5: **H04N 9/16**, H04N 5/58

(21) Application number: **87100933.8**

(22) Date of filing: **23.01.87**

(54) Luminance adjusting system for a flat matrix type cathode-ray tube.

(30) Priority: **24.01.86 JP 14094/86**

(43) Date of publication of application:
**30.09.87 Bulletin  87/40**

(45) Publication of the grant of the patent:
**15.04.92 Bulletin  92/16**

(84) Designated Contracting States:
**CH DE FR GB LI**

(56) References cited:
**EP-A- 0 150 991**
**EP-A- 0 180 642**
**US-A- 4 149 111**

(73) Proprietor: **MITSUBISHI DENKI KABUSHIKI
KAISHA
2-3, Marunouchi 2-chome Chiyoda-ku
Tokyo 100(JP)**

(72) Inventor: **Hara, Zenichirou c/o Mitsubishi De-
nki K.K.
Nagasaki Works No.6-14 Maruo-machi
Nagasaki-shi Nagasaki(JP)**
Inventor: **Iwatsuji, Ichirou c/o Mitsubishi De-
nki K.K.
Nagasaki Works No.6-14 Maruo-machi
Nagasaki-shi Nagasaki(JP)**

(74) Representative: **Lehn, Werner, Dipl.-Ing. et al
Hoffmann, Eitle & Partner Patentanwälte Ar-
abellastrasse 4
W-8000 München 81(DE)**

Note: Within nine months from the publication of the mention of the grant of the European patent, any person
may give notice to the European Patent Office of opposition to the European patent granted. Notice of opposition
shall be filed in a written reasoned statement. It shall not be deemed to have been filed until the opposition fee
has been paid (Art. 99(1) European patent convention).

## Description

This invention relates to a luminance adjusting system for a flat matrix type cathode-ray tube-(CRT), which controls the brightness of a picture displayed on the CRT according to environmental brightness (see for example EP-A-0150991).

An example of a conventional flat matrix type CRT is so designed that grid electrodes are made up of a plurality of scanning electrodes and a plurality of data electrodes which are arranged to form a matrix structure together with the scanning electrodes, and pulse voltages of predetermined gradations are applied selectively to selected ones of the electrodes in the two different groups to cause the picture elements corresponding to the selected electrodes to emit light.

In this operation, as is well known in the art, electrons emitted from a direct-heating type linear filament are accelerated by the voltages applied to the grid electrodes consisting of the scanning electrodes and the data electrodes, to impinge an anode at a high voltage, whereby a light emitting material such as a fluorescent layer which is formed on the anode by coating, is caused to emit light by the energy of collision.

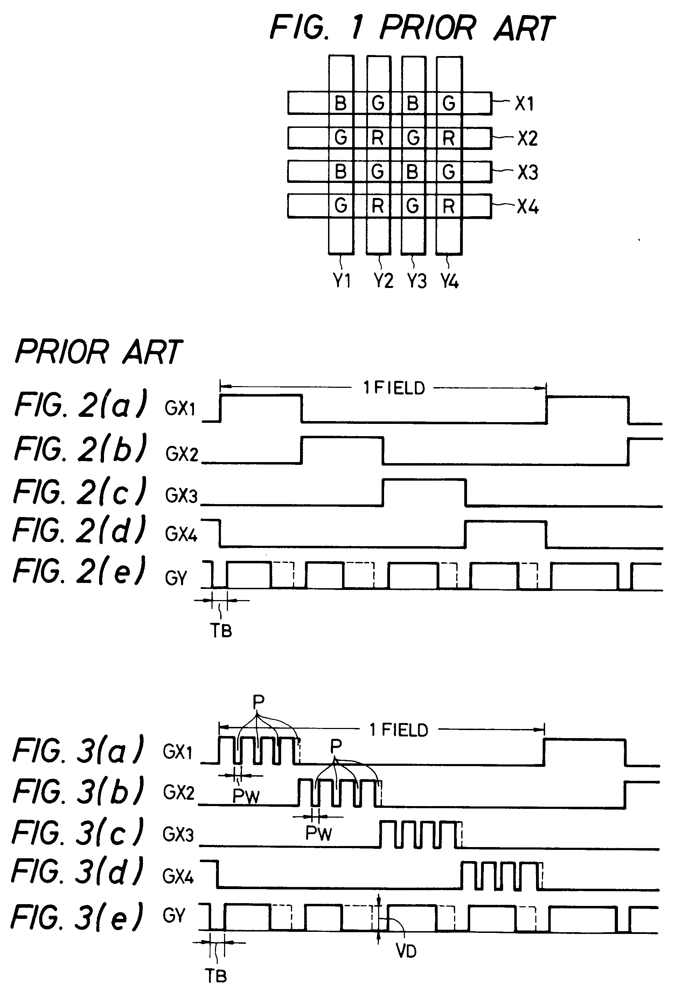

Fig. 1 shows the grid electrode structure of the flat matrix type CRT. In the flat matrix type CRT, the grid electrode structure is a 4x4 matrix structure consisting of scanning electrodes X1 through X4 and data electrodes Y1 through Y4. In correspondence to the 4x4 matrix structure, fluorescent substances of red, green and blue are applied to the predetermined parts of the anode surface (not shown) as required, so that sixteen (16) picture elements in one element can appear red (R), green(G), and blue (B).

A desired one of the picture elements can be selected by applying voltages to the scanning electrode and the data electrode which are provided for the picture element. And only the picture element thus selected can emit light.

Figs. 2(a) through 2(e) are diagrams for a description of the display system in which, in the halftone display by the above-described conventional CRT, one field is divided into four parts, and, in a 1/4 duty, display is carried out with 64 gradations. Figs. 2(a) through 2(d), reference characters $GX_1$ through $GX_4$ designate the voltage waveforms of scanning signals applied to the scanning electrodes X1 through X4 shown in Fig. 1, respectively. In Fig. 3(e) , reference character GY designates the pulse-width-controlled voltage waveform of one of data signals $GY_1$ through $GY_4$ respectively applied to the data electrodes $Y_1$ through $Y_4$ shown in Fig. 1. When the scanning signal and the data signal are both at the high level, the corresponding picture element is caused to emit light. In Fig. 2(e), reference character $T_B$ designates a blanking time.

In the above-described conventional CRT, of the video signal to be displayed, only the parts corresponding to brightness instructions are subjected to light emission control. That is, only the degrees of brightness on the display instruction are adjusted by the pulse width control of the data signals. Accordingly, for the CRT, it is impossible to perform the adjustment of the brightness of a display picture according to the environmental brightness. Therefore, depending on the environmental brightness, the display picture becomes difficult to observe.

Accordingly, an object of this invention is to eliminate the above-described difficulty accompanying a conventional flat matrix CRT. More Specifically, an object of the invention is to provide a luminance adjusting system for a flat matrix type CRT, which is capable of controlling the brightness of a picture according to environment brightness.

The above and other objects of the present invention are met by the provision of a luminance adjusting system for a flat matrix type CRT in which grid electrodes consists of a plurality of scanning electrodes and a plurality of data electrodes which are arranged to form a matrix structure with the scanning electrodes, and pulse voltages for gradations required are supplied selectively to the scanning electrodes and data electrodes so that picture element determined by the scanning electrodes and data electrodes to which the pulse voltages are supplied are caused to emit light, and further, according to the invention, slots are provided either in the waveforms of pulse voltages applied to the scanning electrodes or in the waveforms of pulse voltages applied to the data electrodes in such a manner that the thus provided slots occur at regular intervals, and the number of slots are determined in correspondence to that of gradations required, whereby the luminance of the CRT is made adjustable.

In the accompanying drawings,

Fig. 1 is an explanatory diagram showing the structure of grid electrodes in the CRT to which the technical concept of the invention is applied;

Figs. 2(a) through 2(e) are waveform diagrams for a description of the operation of a conventional flat matrix CRT; and

Figs. 3(a) through 3(e) are waveform diagrams for a description of one embodiment of this invention.

A preferred embodiment of this invention will be described with reference to Figs. 3(a) through 3-(e) corresponding to Figs. 2(a) through 2(e). For convenience in description, in Figs. 3(a) through 3-(e), the number of gradations is four (4). As shown in Figs. 3(a) through 3(d), four (n = 4) slots P corresponding to the number of gradations are provided in each of the waveforms of the voltages $GX_1$ through $GX_4$ applied respectively to the scanning electrodes X1 through X4 in such a manner that the slots P occur at predetermined intervals. The voltage signals $GX_1$ through $GX_4$ each having slots are easily obtained by a well-known manner. For example, ordinary scanning signals and a brightness control slot signal are applied to AND gates to be subjected to logical product operation. Then, the outputs of the AND gates are applied to the scanning electrodes $X_1$ through $X_4$ as the voltage signals $GX_1$ through $GX_4$.

Accordingly, when the voltages applied to the scanning electrodes are controlled as described above, light emission is effected for the period that the voltage applied to the scanning electrode and the voltage (shown in Fig. 3(e)) applied to the data electrode are both at the high level, and it is not effected for the period that the slot P occurs. Therefore, in the case when the environmental brightness is low, the display picture can be made uniformly dark, which facilitates the observation of the picture. Furthermore, by controlling the width $P_W$ of the slot P, the brihtness of the display picture can be controlled as required.

In the luminance adjusting system for the flat matrix type CRT, according to the invention, as was described above, the slots P are provided in the waveforms of pulse voltages applied to the scanning electrodes in such a manner that the slots P occur at regular intervals and the number of slots P are determined in correspondence to the number of gradations required, whereby the brightness of the picture displayed on the CRT can be adjusted. Furthermore, the width PW of the slots P is controlled to adjust the brightness of the display picture.

It goes without saying that the slots P may provided in the waveforms of the voltages applied to the data electrodes instead of the scanning electrodes. That is, all that is necessary is to provide the slots P either in the waveforms of the voltages applied to the scanning electrodes or in the waveform of the voltages applied to the data electrodes in such a manner that the slots occur at regular intervals ,and the number of slots P are determined in correspondence to the number of gradations selected.

## Claims

1. A luminance adjusting system for a flat matrix CRT in which grid electrodes comprise a plurality of scanning electrodes and a plurality of data electrodes which are arranged to form a matrix structure with said scanning electrodes, and pulse voltages for gradations required are applied selectively to said scanning electrodes and data electrodes so that picture elements determined by said scanning electrodes and data electrodes to which said pulse voltages are applied are caused to emit light, slots being provided in the waveforms of pulse voltages applied to said grid electrodes in such a manner that said slots occur at regular intervals, and the number of slots being determined in correspondence to the number of gradations required, to thereby make the luminance of said CRT adjustable according to enviromental brightness.

2. A luminance adjusting system as claimed in claim (1) , wherein the width of said slots is controlled to adjust the brightness of displayed picture.

3. A luminance adjusting system as claimed in claim (1) , wherein said slots are provided in the waveforms of pulse voltages applied to said scanning electrodes of said grid electrodes.

4. A luminance adjusting system as claimed in claim (1) , wherein said slots are provided in the waveforms of pulse voltages applied to said data electrodes of said grid electrodes.

## Revendications

1. Système de réglage de luminance pour un CRT à matrice plate dans lequel des électrodes de grille comprennent une pluralité d'électrodes de balayage et une pluralité d'électrodes de données qui sont disposées pour former une structure de matrice avec lesdites électrodes de balayage, et des tensions à impulsions pour des gradations requises sont appliquées sélectivement auxdites électrodes de balayage et électrodes de données de sorte que les éléments d'image déterminés par lesdites électrodes de balayage et électrodes de données auxquelles lesdites tensions à impulsions sont appliquées, sont entrainés à émettre de la lumière, des créneaux étant prévus dans les formes d'onde des tensions à impulsions appliquées auxdites électrodes de grille de façon telle que lesdits créneaux aient lieu à intervalles réguliers, et le nombre de créneaux étant déterminé en correspondance avec le nombre de gradations requis, pour rendre de ce fait la luminance dudit CRT réglable selon la brillance de l'environnement.

2. Système de réglage de luminance selon la revendication 1, dans lequel la largeur desdits créneaux est contrôlée pour régler la brillance de l'image visualisée.

3. Système de réglage de luminance selon la revendication 1, dans lequel lesdits créneaux sont prévus dans les formes d'onde des tensions à impulsions appliquées auxdites électrodes de balayage desdites électrodes de grille.

4. Système de réglage de luminance selon la revendication 1, dans lequel lesdits créneaux sont prévus dans les formes d'onde des tensions à impulsions appliquées auxdites électrodes de données desdites électrodes de grille.

**Patentansprüche**

1. Luminanzeinstellsystem für eine Kathodenstrahlröhre der Flachmatrixart, in welcher Gitterelektroden eine Vielzahl von Abtastelektroden sowie eine Vielzahl von Datenelektroden umfassen, welche angeordnet sind, mit den Abtastelektroden eine Matrixstruktur zu bilden, und Impulsspannungen für erforderliche Abstufungen selektiv an die Abtastelektroden und die Datenelektroden angelegt werden, so daß Bildelemente, die durch die Abtastelektroden und Datenelektroden, an welche die Impulsspannungen angelegt werden, bestimmt sind, veranlaßt werden, Licht auszusenden, wobei in den Signalformen von an die Gitterelektroden angelegten Impulsspannungen Schlitze derartig vorgesehen sind, daß die Schlitze in regulären Abständen auftreten, und die Anzahl von Schlitzen in Übereinstimmung mit der benötigten Anzahl von Abstufungen bestimmt wird, um dadurch die Luminanz der Kathodenstrahlröhre gemäß der Umgebungshelligkeit einstellbar zu machen.

2. Luminanzeinstellsystem nach Anspruch 1, dadurch **gekennzeichnet,** daß die Breite der Schlitze gesteuert wird, um die Helligkeit des wiedergegebenen Bildes einzustellen.

3. Luminanzeinstellsystem nach Anspruch 1, dadurch **gekennzeichnet,** daß die Schlitze in den Signalformen von Impulsspannungen vorgesehen sind, die auf die Abtastelektroden der Gitterelektroden gegeben werden.

4. Luminanzeinstellsystem nach Anspruch 1, dadurch **gekennzeichnet,** daß die Schlitze in den Signalformen von Impulsspannungen vorgesehen sind, die auf die Datenelektroden der Gitterelektroden gegeben werden.

# FIG. 1 PRIOR ART

PRIOR ART

FIG. 2(a) GX1
FIG. 2(b) GX2
FIG. 2(c) GX3
FIG. 2(d) GX4
FIG. 2(e) GY

FIG. 3(a) GX1
FIG. 3(b) GX2
FIG. 3(c) GX3
FIG. 3(d) GX4
FIG. 3(e) GY